# EUROPÄISCHE PATENTSCHRIFT

(11) **EP 0 545 306 B1**
(45) Veröffentlichungstag und Bekanntmachung des Hinweises auf die Patenterteilung: **31.01.1996**
(21) Anmeldenummer: 92120297.4
(22) Anmeldetag: 27.11.1992
(51) Int. Cl.: C08F 210/14

(54) **Copolymerisate und ihre Verwendung als Gleit- und Trennmittel für die Verarbeitung thermoplastischer Kunststoffe**
Copolymers and their use as lubricants and releasing agents for processing thermoplastic synthetic materials
Copolymères et leur application comme lubrifiants et agents de démoulage pour le traitement de matières synthétiques thermoplastiques

(30) Priorität: 30.11.1991 DE 4139601
(43) Veröffentlichungstag der Anmeldung: 09.06.1993
(73) Patentinhaber: HOECHST AKTIENGESELLSCHAFT, D-65926 Frankfurt am Main (DE)
(72) Erfinder: Heinrichs, Franz-Leo, Dr., W-8901 Gablingen (DE); Hohner, Gerd, Dr., W-8906 Gersthofen (DE); Lukasch, Anton, W-8901 Meitingen (DE); Piesold, Jan-Peter, Dr., W-8900 Augsburg (DE)

(56) Entgegenhaltungen:
- US-A- 4 184 993
- US-A- 4 399 248

## Beschreibung

### Copolymerisate und ihre Verwendung als Gleit- und Trennmittel für die Verarbeitung thermoplastischer Kunststoffe

Die vorliegende Erfindung bezieht sich auf Copolymerisate aus α-Olefinen, ungesättigten Carbonsäuren, ungesättigten Carbonsäureestern und gegebenenfalls Styrol sowie die Verwendung solcher Copolymerisate als Hilfsmittel für die Verarbeitung von Kunststoffen.

Bei der Verarbeitung thermoplastischer Kunststoffe werden üblicherweise Gleitmittel eingesetzt, die einerseits das Fließverhalten der Polymerschmelze verbessern und andererseits deren Klebeneigung an den metallischen Teilen der Verarbeitungsmaschinen vermindern sollen. Eine besondere Bedeutung besitzen Gleitmittel bei der Verarbeitung von Polyvinylchlorid, da dieser Kunststoff aufgrund seiner Empfindlichkeit gegen hohe Temperaturbelastungen und Scherkräfte sowie seiner ausgeprägten Klebeneigung nicht ohne Gleitmittel verarbeitet werden kann.

Bei Gleitmitteln unterscheidet man zwischen solchen, die mit der Polymerschmelze gut verträglich sind und daher hauptsächlich fließverbessernd wirken (innere Gleitmittel) und solchen, die eine mehr oder minder große Unverträglichkeit besitzen und sich daher an Phasengrenzen anreichern und dort z.B. Trennwirkung entfalten (äußere Gleitmittel).

Zur Verbesserung des Fließverhaltens von Polyvinylchloridschmelzen steht eine Vielzahl von wohlfeilen, gut zugänglichen Produkten zur Verfügung. Hier sind beispielsweise Fettalkohole, Fettsäuren, Fettsäurepartialester und Fettsäureamide zu nennen.

Problematischer ist die Auswahl von geeigneten äußeren Gleitmitteln für PVC, da diese zum Teil widersprüchliche Anforderungen erfüllen müssen. Um wirksam zu sein, müssen geeignete Gleitmittel eine gewisse Unverträglichkeit mit der PVC-Schmelze aufweisen, damit ein trennwirksamer Film zwischen der Schmelze und den Metallteilen der Verarbeitungsmaschinen entstehen kann. Unverträgliche Additive haben jedoch den Nachteil, daß sie häufig stark trübend auf das Endprodukt wirken. Bei den zahlreichen Anwendungen, bei denen ein hochtransparentes Endprodukt gewünscht wird, ist deswegen die zulässige Einsatzmenge eines Trennmittels häufig derart limitiert, daß seine Wirkung nicht mehr ausreichend ist. Besonders nachteilig wirken sich diese Probleme bei der Herstellung von dünnen PVC-Kalanderfolien aus, da die Klebeneigung und geringe mechanische Belastbarkeit derartiger Folien im heißen Zustand zur Loslösung von den Walzen einen hohen Gleitmitteleinsatz erfordert, andererseits jedoch an derartige Folien, z. B. im Verpackungssektor, besonders hohe Transparenzanforderungen gestellt werden.

Bekannte Gleitmittel für die Herstellung von weichmacherfreien PVC-Folien sind einerseits Montanwachse und andererseits praktisch neutrale Mischester aus aliphatischen, cycloaliphatischen oder aromatischen Dicarbonsäuren mit 2 bis 22 Kohlenstoffatomen, aliphatischen Polyolen mit 2 bis 6 Hydroxylgruppen und aliphatischen Monocarbonsäuren mit 12 bis 30 Kohlenstoffatomen mit Hydroxyl- bzw. Säurezahlen von 0 bis 6 (vgl. GB 1 292 548), sowie praktisch neutrale Mischester aus aliphatischen Diolen, aliphatischen, cycloaliphatischen oder aromatischen Polycarbonsäuren mit 2 bis 6 Carboxylgruppen und aliphatischen monofunktionellen Alkoholen mit 12 bis 30 Kohlenstoffatomen (vgl.GB 1 450 273).

Weiterhin sind sind Seifen und Seifen-Ester bekannt, die aus langkettigen Carbonsäuren hergestellt werden, die durch radikalische Addition von kurzkettigen Monocarbonsäuren, vorzugsweise von Propionsäure, an langkettige α- Olefine mit 22 bis 100 C-Atomen zugänglich sind (vgl. US 4 029 682). Die so erhaltenen Seifen und Seifen-Ester sind zwar ausgezeichnete Gleit- und Trennmittel für die Kunststoffverarbeitung, erfordern jedoch zu ihrer Herstellung einen zwei- oder dreistufigen Herstellungsprozess, der zur Verteuerung dieser Produkte führt. Vorteilhaft wäre es daher, wenn man in einem Reaktionsschritt direkt zu geeigneten Gleit- und Trennmitteln gelangen könnte.

Beschrieben sind auch Gleit- und Trennmittel für chlorhaltige Thermoplaste, die durch Copolymerisation von Acrylsäure, Acrylsäureestern, Maleinsäure oder Maleinsäureestern mit Ethylen hergestellt werden (vgl. US 4 438 008). Diese Gleit-und Trennmittel sind zwar in einem Reaktionsschritt zugänglich und weisen eine gute Verträglichkeit und Trennwirkung in PVC auf, jedoch erfordert die Copolymerisation hohe Drücke und Temperaturen, mithin speziell ausgelegte Apparaturen.

Schließlich sind Copolymerisate aus α-Olefinen mit mehr als 30 C-Atomen und Maleinsäure oder Maleinsäureestern bekannt (vgl.US 4 334 038). Diese Gleitmittel sind zwar in einem Reaktionsschritt ohne speziell ausgelegte Apparaturen zugänglich und weisen eine hohe Trennwirkung auf, besitzen jedoch noch nicht eine allseitig zufriedenstellende Wirkung in PVC.

Die aus anwendungstechnischer Sicht sehr vorteilhaften Montanwachse sind wegen ihres hohen Preises auf technisch anspruchsvolle Gebiete beschränkt. Die bekannten Mischester verursachen in modifiziertem Polyvinylchlorid bereits bei niederer Dosierung relativ starke Trübungen und kommen als Gleit- und Trennmittel für die Herstellung der besonders hochwertigen Niedertemperatur-(NT-) Folien (®Luvithermfollen), bei denen 2 bis 4 Teile Gleit- und Trennmittel auf 100 Teile E-PVC eingesetzt werden, nicht in Betracht.

Es bestand daher die Aufgabe, Gleit- und Trennmittel bereitzustellen, die einerseits die positiven Eigenschaften der Montanwachse, wie beispielsweise ihre Verwendbarkeit in NT-Folien aufweisen, und die andererseits auf einfache und wirtschaftliche Weise zugänglich sind.

Die erfindungsgemäßen, Gleit- und Trennmittel sind Copolymerisate aus α-Olefinen, ungesättigten Carbonsäuren und ungesättigten Carbonsäureestern sowie gegebenenfalls vinylaromatischen Verbindungen vom Styroltyp.

Als α-Olefine kommen solche mit einer Kettenlänge von 12 bis 60, bevorzugt von 18 bis 60, besonders bevorzugt von 24 bis 60 C-Atomen in Frage. Es können sowohl kettenreine Olefine als auch Olefin-Gemische eingesetzt werden, wie sie z.B. in den bekannten Herstellverfahren als Destillationsschnitte oder Destillationsrückstände anfallen. Technische α-Olefingemische, insbesondere solche mit höherer Kettenlänge, können neben 1- Alkenen mehr oder minder hohe Mengen innen- und seitenständige olefinische Doppelbindungen (Vinyliden- und Vinylengruppen) enthalten.

Als ungesättigte Carbonsäuren werden erfindungsgemäß Verbindungen der allgemeinen Formel CH₂=CR¹-COOH, worin R¹ ein Wasserstoffatom oder eine Methylgruppe ist, also beispielsweise Acryl- oder Methacrylsäure eingesetzt. Als ungesättigte Carbonsäureester werden Verbindungen der allgemeinen Formel CH₂=CR¹-COOR verwendet, wobei R¹ die obige Bedeutung hat und R einen geradkettigen oder verzweigten Alkylrest mit 1 bis 6 C-Atomen bedeutet. Bevorzugt sind die Methyl- und Ethylester der Acryl- oder Methacrylsäure, besonders bevorzugt ist der Methylester der Acrylsäure.

Als vinylaromatische Verbindungen können Styrol, 3-Methylstyrol, 4- Methylstyrol oder α-Methylstyrol eingesetzt werden. Möglich ist auch der Einsatz mehrerer der genannten Carbonsäuren, Carbonsäureester und gegebenenfalls Styrolen.

Die Herstellung der erfindungsgemäßen Gleitmittel erfolgt in an sich bekannter Weise durch Umsetzung der Ausgangsmonomeren unter katalytischer Einwirkung geringer Mengen organischer Peroxide in Gegenwart oder in Abwesenheit eines inerten Lösemittels. Bevorzugt ist die Polymerisation in Abwesenheit eines Lösemittels. Beispielsweise kann ein Gemisch aus Carbonsäure, Carbonsäureester und Radikalstarter zu vorgelegtem α-Olefin unter Rühren bei erhöhter Temperatur zugetropft werden. Nach Beendigung der Reaktion können nicht umgesetzte Monomere sowie flüchtige Zerfallsprodukte des Peroxids durch Destillation abgetrennt werden. Als Radikalstarter werden bevorzugt organische Peroxide eingesetzt. Dabei ist die Reaktionstemperatur der Zerfallscharakteristik des jeweils verwendeten Peroxids anzupassen. Bei einer Temperatur von 100 bis 160°C sind beispielsweise Dialkylperoxide wie Di-t-butylperoxid oder Diaroylperoxide wie Dibenzoylperoxid gut geeignet. Das molare Verhältnis der Monomerkomponenten und damit der chemische Aufbau und die Polarität der Copolymerisate können in weiten Grenzen eingestellt werden. Damit besteht die Möglichkeit, die Eigenschaften des Gleitmittels den jeweiligen anwendungstechnischen Erfordernissen in optimaler Weise anzupassen.

Die Monomeren werden in den folgenden Verhältnissen eingesetzt:

| | |
|---|---|
| α-Olefin | 20 bis 99,5, vorzugsweise 40 bis 95 Gew.-Teile, |
| ungesättigte Carbonsäure | 0,1 bis 50, vorzugsweise 0,5 bis 30 Gew.-Teile, |
| unges. Carbonsäureester | 0,1 bis 60, vorzugsweise 1,0 bis 40 Gew.-Teile, |
| Styrolverbindung | 0,0 bis 30, vorzugsweise 0,0 bis 20 Gew.-Teile. |

Die Reaktionstemperatur beträgt 70 bis 180, vorzugsweise 90 bis 160°C, der Reaktionsdruck 1,0 bis 5,0, vorzugsweise 1,0 bis 1,5 bar. die Reaktionszeit 0,5 bis 20, vorzugsweise 1 bis 7 Stunden.

Die erfindungsgemäßen Copolymerisate werden als Gleit- und Trennmittel in thermoplastischen Kunststoff-Formmassen eingesetzt, beispielsweise in Polyvinylchlorid, welches durch die bekannten Verfahren - beispielsweise Suspensions-, Masse-, Emulsionspolymerisation - hergestellt werden kann, Mischpolymeren des Vinylchlorids mit bis zu 30 Gew.-% an Comonomeren wie beispielsweise Vinylacetat, Vinylidenchlorid, Vinylether, Acrylnitril, Acrylsäureester, Maleinsäuremono- oder -diestern oder Olefinen, sowie in Pfropfpolymerisaten des Polyvinylchlorids und Polyacrylnitrils. Bevorzugt sind Polyvinylchlorid, Polyvinylidenchlorid, Ethylen- Vinylacetat-Copolymere, Polyacrylnitril, Copolymere aus Vinylchlorid und Vinylacetat sowie daraus abgeleitete Pfropfpolymere oder Mischungen der vorgenannten Thermoplaste. In der Anwendung bei der Verarbeitung von PVC, zeigen solche erfindungsgemäßen Copolymerisate besonders vorteilhafte Eigenschaften, die einen niedrigen Carbonsäuregehalt und einen hohen Estergehalt aufweisen. Ein zu hoher Carbonsäuregehalt wirkt sich negativ auf das Farbverhalten der Gleitmittel, vor allem in Ca/Zn-stabilisiertem PVC aus. Ein hoher Estergehalt führt aufgrund seiner die Verträglichkeit mit dem PVC erhöhenden Wirkung zu einem besseren Transparenzverhalten, einem besseren Fließverhalten der PVC-Schmelze und zu einer geringeren Verzögerung der Plastizierung des PVC.

Die Zugabemenge beträgt 0,05 bis 5 Gew.-%, bezogen auf die Formmasse. Basiert die Formmasse auf M- oder S-PVC, so beträgt die Zugabemenge vorzugsweise 0,05 bis 1 Gew.-%, basiert sie auf E-PVC, so ist die Menge vorzugsweise 1,0 bis 5, insbesondere 2 bis 4 Gew.-%, jeweils bezogen auf das Polymere. Das Einmischen der erfindungsgemäßen Copolymeren in die Polymeren geschieht auf die übliche Weise während der Herstellung oder Verarbeitung der Formmassen.

Neben den erfindungsgemäßen Copolymeren kann die Kunststoff-Formmasse zusätzlich Füllstoffe, Wärmestabilisatoren, Lichtschutzmittel, Antistatika, Flammschutzmittel, Verstärkungsstoffe, Pigmente, Farbstoffe, Verarbeitungshilfsmittel, Gleitmittel, Schlagzähmacher, Antioxidantien, Treibmittel oder optische Aufheller in den üblichen Mengen enthalten.

Die nachfolgenden Beispiele sollen die Erfindung erläutern.

Säure- und Verseifungszahlen bzw. Tropfpunkte wurden nach den DGF- Einheitsmethoden M-IV 2 (57) bzw. M-III 3 (75) bestimmt (Normen der Deutschen Gesellschaft für Fettwissenschaft e.V.). Die Schmelzviskositäten wurden mit Hilfe eines Rotationsviskosimeters gemessen.

### Beispiel 1

### Herstellung eines C₂₄-C₆₀-α-Olefin-Acrylsäure-Methylacrylat-Copolymerisats:

In einem mit Thermometer, Rührer, Tropftrichter und Rückflußkühler ausgestattetem Fünfhalskolben wurden 500 g eines handelsüblichen C₂₄-C₆₀ α-Olefin-Schnittes vorgelegt und auf 140°C erhitzt. Bei dieser Temperatur tropfte man unter Rühren innerhalb von 5 Stunden eine Mischung aus 219,0 g Methylacrylat, 10,0 g Acrylsäure und 5,0 g Di-t-butylperoxid zu. Nach beendetem Zutropfen ließ man das Gemisch noch 30 min nachreagieren und destillierte flüchtige Bestandteile im Vakuum bei ca. 15 mbar und 170°C Badtemperatur ab. Das farblose, wachsartig erstarrende Reaktionsprodukt wurde in Schalen ausgegossen.

Physikalische Daten: Säurezahl 11 mg KOH/g; Verseifungszahl ca. 160 mg KOH/g; Tropfpunkt 70°C; Schmelzviskosität 520 mPa.s (gemessen bei 90°C).

### Beispiel 2

### Herstellung eines 1-Tetradecen-Acrylsäure-Methylacrylat-Copolymerisats:

Nach analogem Verfahren wie in Beispiel 1 beschrieben setzte man 196,0 g 1-Tetradecen, 131,7 g Methylacrylat, 4,0 g Acrylsäure und 2,6 g Di-t-butylperoxid miteinander um. Das resultierende farblose, halbfeste Terpolymerisat wies eine Säurezahl von 10 mg KOH/g und eine Verseifungszahl von ca. 205 mg KOH/g auf.

### Beispiel 3

### Herstellung eines C₂₄-C₆₀-α-Olefin-Acrylsäure-Methylacrylat-Styrol-Polymerisats

Analog wie in Beispiel 1 wurden 500 g C₂₄,-C₆₀-α-Olefn mit einer Mischung aus 175,0 g Methylacrylat, 47 g Styrol und 16,0 g Acrylsäure in Gegenart von 5,0 g t-Butylbenzoat copolymerisiert.

Man erhielt ein farbloses Wachs mit folgenden Kenndaten:
Säurezahl 16 mg KOH/g; Verseifungszahl 161 mg KOH/g; Tropfpunkt 72 °C; Schmelzviskosität 390 mPa.s (gemessen bei 90 °C).

### Beispiel 4

Die Copolymeren gemäß Beispiel 1, 2 und 3 wurden in folgendem Rezept auf ihr Transparenzverhalten geprüft. Als Vergleich diente ein handelsüblicher Montansäureester.

| | |
|---|---|
| S-PVC (K-Wert ca. 60) | 100 Gew.-Teile |
| acrylathaltiges Verarbeitungshilfsmittel | 1,0 Gew.-Teile |
| Octylzinnstabilisator | 1,5 Gew.-Teile |
| Glycerinmonooleat | 0,3 Gew.-Teile |
| Prüfprodukt | 0,6 Gew.-Teile |

Diese Mischungen wurden auf einem Walzwerk bei 190 °C plastiziert, danach wurden 0,5 und 2,0 mm dicke Plättchen gepresst. Diese wurden mit einem Transparenzmeßgerät in neutralgrauem Licht geprüft:

| Prüfprodukt | Transparenz in % | |
|---|---|---|
| | 0,5mm | 2,0mm |
| Copolymer I (gem. Beisp. 1) | 76,8 | 66,7 |
| Copolymer II (gem. Beisp.2) | 83,3 | 74,9 |
| Copolymer III (gem. Beispiel 3) | 83,7 | 67,5 |
| Ethylenglycolmontanat (Hoechst Wachs E) | 69,6 | 41,6 |

### Beispiel 5

Im folgenden Prüfrezept wurden die Copolymern gemäß Beispiel 1, 2 und 3 auf ihre Trennwirkung geprüft:

| | |
|---|---|
| M-PVC (K-Wert ca. 57) | 100 Gew.-Teile |
| MBS-Schlagzähmacher | 8 Gew.-Teile |
| acrylathaltiges Verarbeitungshilfsmittel | 1,2 Gew.-Teile |
| Thiozinnstabilisator | 1,6 Gew.-Teile |
| epoxidiertes Sojabohnenöl | 1,0 Gew.-Teile |
| Glycerinmonooleat | 0,3 Gew.-Teile |
| Prüfprodukt | 0,6 Gew.-Teile |

Die Prüfung erfolgte auf einem Walzwerk bei 190 °C und 15/20 Upm. Die Prüfung wurde abgebrochen, wenn sich das Walzfell braun verfärbte.

| Prüfprodukt | klebfreie Zeit | Endstabilität |
|---|---|---|
| Copolymer I (gem. Beisp. 1) | 27 min | 30 min |
| Copolymer II (gem. Beisp. 2) | 30 min | 30 min |
| Copolymer III (gem. Beisp. 3) | 22 min | 35 min |
| Ethylenglycolmontanat | 16 min | 35 min |
| (Hoechst Wachs E) | | |

### Beispiel 6

Ein PVC-Compound der folgenden Zusammensetzung

| | |
|---|---|
| S-PVC, K-Wert ca. 58 | 100,0 Gew.-Teile |
| flüssiger Zinkstabilisator | 0,1 Gew.-Teile |
| Calciumstearat | 0,3 Gew.-Teile |
| Co-Stabilisator (β-Diketon) | 0,3 Gew.-Teile |
| epox. Sojabohnenöl (ESO) | 3,0 Gew.-Teile |
| MBS-Schlagzähmacher | 8,0 Gew.-Teile |
| acrylathaltig. Verarbeitungshilfsmittel | 1,0 Gew.-Teile |
| Glycerinmonooleat | 1,0 Gew.-Teile |
| Schönungsmittel (Blaupigment) | 2,0 Gew.-Teile |
| Prüfprodukt | 1,2 Gew.-Teile |

wurde auf einem Walzwerk bei 190°C 5 Minuten lang gewalzt. Danach wurden Proben des Fells entnommen und mit einem Farbmeßgerät auf ihren Yellowness-Index (YI) geprüft.

| Prüfprodukt | YI |
|---|---|
| Copolymer I (gem. Beisp. 1) | -31,8 |
| Copolymer II (gem. Beisp. 2) | -31,4 |
| Copolymer II (gem. Beisp. 3) | -29,0 |
| Ethylenglycolmontanat | |
| (Hoechst Wachs E) | -27,2 |

### Beispiel 7

Ein PVC-Compound der Zusammensetzung

| | |
|---|---|
| E-PVC (K-Wert ca 78) | 100,0 Gew.-Teile |
| Diphenylthioharnstoff | 0,5 Gew.-Teile |
| Prüfprodukt | 3,0 Gew.-Teile |

wurde auf einem Walzwerk bei 190°C und 15/20 Upm gewalzt. Bestimmt wurde die Zeit bis zur vollständigen Ausbildung eines homogenen Walzfells (Fellbildungszeit).

| Prüfprodukt | Fellbildungszeit (min) |
|---|---|
| Coplymer I (gem. Beisp. 1) | 1,0 |
| Coplymer II (gem. Beisp. 2) | 1,0 |
| Ethylenglycolmontanat | 4,0 |
| (Hoechst Wachs E) | |

## Patentansprüche

1. Copolymerisat, bestehend aus
20 bis 99,5 Gew.-Teilen Einheiten, die sich von einem C₁₂-C₆₀-α-Olefin ableiten,
0,1 bis 50 Gew.-Teilen Einheiten, die sich von einer Carbonsäure der Formel CH₂=CR¹-COOH ableiten,
0,1 bis 60 Gew.-Teilen Einheiten, die sich von einem Carbonsäureester der Formel CH₂=CR¹-COOR ableiten, wobei in diesen Formeln R¹ für ein Wasserstoffatom oder eine Methylgruppe und R für einen geradkettigen oder verzeigten Alkylrest mit 1 bis 6 C-Atomen stehen, und
0,0 bis 30 Gew.-Teilen Einheiten, die sich von Styrol, 3-Methylstyrol, 4-Methylstyrol oder α-Methylstyrol ableiten.

2. Colymerisat nach Anspruch 1, dadurch gekennzeichnet, daß das α-Olefin ein C₁₈ bis C₆₀-α-Olefin ist.

3. Copolymerisat nach Anspruch 1, dadurch gekennzeichnet, daß das α-Olefin ein C₂₄, bis C₆₀-α-Olefin ist.

4. Copolymerisat nach Anspruch 1, dadurch gekennzeichnet, daß der Carbonsäureester der Formel CH₂=CR¹-COOR ein Ester ist, in dessen Formel R¹ ein Wasserstoffatom oder eine Methylgruppe und R eine Methyl- oder Ethylgruppe ist.

5. Verwendung des Copolymerisats gemäß Anspruch 1 als Verarbeitungshilfsmittel für thermoplastische Kunststoffe.

6. Thermoplastische Kunststoff-Formmasse, enthaltend 0,05 bis 5 Gew.-%, bezogen auf die Formmasse, eines Copolymerisats gemäß Anspruch 1.

7. Thermoplastische Kunststoff-Formmasse nach Anspruch 6, dadurch gekennzeichnet, daß sie auf Polyvinylchlorid, Polyvinylidenchlorid, Ethylen-Vinylacetat-Copolymeren, Polyacrylnitril, Pfropf- oder Copolymeren aus Vinylchlorid und Vinylacetat oder Mischungen dieser Thermoplasten basiert.

8. Thermoplastische Kunststoff-Formmasse nach Anspruch 6, dadurch gekennzeichnet, daß sie zusätzlich Füllstoffe, Wärmestabilisatoren, Lichtschutzmittel, Antistatika, Flammschutzmittel, Verstärkungsstoffe, Pigmente, Farbstoffe, Verarbeitungshilfsmittel,Gleitmittel, Schlagzähmacher, Antioxidantien, Treibmittel oder optische Aufheller enthält.

## Claims

1. A copolymer comprising
20 to 99.5 parts by weight of units which are derived from a C₁₂-C₆₀-α-olefin,
0.1 to 50 parts by weight of units which are derived from a carboxylic acid of the formula CH₂=CR¹-COOH, 0.1 to 60 parts by weight of units which are derived from a carboxylic acid ester of the formula CH₂=CR¹-COOR, in which formulae R¹ is a hydrogen atom or a methyl group and R is a straight-chain or branched alkyl radical having 1 to 6 carbon atoms, and
0.0 to 30 parts by weight of units which are derived from styrene, 3-methylstyrene, 4-methylstyrene or α-methylstyrene.

2. A copolymer as claimed in claim 1, in which the α-olefin is a C₁₈ to C₅₀-α-olefin.

3. A copolymer as claimed in claim 1, in which the α-olefin is a C₂₄, to C₆₀-α-olefin.

4. A copolymer as claimed in claim 1, in which the carboxylic acid ester of the formula CH₂=CR¹-COOR is an ester in the formula of which R¹ is a hydrogen atom or a methyl group and R is a methyl or ethyl group.

5. The use of a copolymer as claimed in claim 1 as a processing auxiliary for thermoplastics.

6. A thermoplastic molding composition comprising 0.05 to 5% by weight, based on the molding composition, of a copolymer as claimed in claim 1.

7. A thermoplastic molding composition as claimed in claim 6, which is based on polyvinyl chloride, polyvinylidene chloride, an ethylene/vinyl acetate copolymer, polyacrylonitrile, a graft polymer or copolymer of vinyl chloride and vinyl acetate or a mixture of these thermoplastics.

8. A thermoplastic molding composition as claimed in claim 6, which additionally comprises fillers, heat stabilizers, light stabilizers, antistatics, flameproofing agents, reinforcing substances, pigments, dyestuffs, processing auxiliaries, lubricants, impact modifiers, antioxidants, blowing agents or optical brighteners.

## Revendications

1. Copolymère composé
de 20 à 99,5 parties en poids de motifs qui dérivent d'une α-oléfine en C₁₂-C₆₀,
de 0,1 à 50 parties en poids de motifs qui dérivent d'un acide carboxylique de formule CH₂=CR¹-COOH,
de 0,1 à 60 parties en poids de motifs qui dérivent d'un ester d'acide carboxylique de formule CH₂=CR¹-COOR, dans ces formules R¹ étant un atome d'hydrogène ou un groupe méthyle et R étant un radical alkyle linéaire ou ramifié avec 1 à 6 atomes de carbone, et
de 0,0 à 30 parties en poids de motifs qui dérivent du styrène, du 3-méthylstyrène, du 4-méthylstyrène ou de l'α-méthylstyrène.

2. Copolymère selon la revendication 1, caractérisé en ce que l'α-oléfine est une α-oléfine en C₁₈ à C₆₀.

3. Copolymère selon la revendication 1, caractérisé en ce que l'α-oléfine est une α-oléfine en C₂₄ à C₆₀.

4. Copolymère selon la revendication 1, caractérisé en ce que l'ester d'acide carboxylique de formule CH₂=CR¹-COOR est un ester dans la formule duquel R¹ représente un atome d'hydrogène ou un groupe méthyle et R représente un groupe méthyle ou éthyle.

5. Utilisation du copolymère selon la revendication 1 comme adjuvant de mise en oeuvre de matières plastiques thermoplastiques.

6. Masse de moulage de matière thermoplastique, contenant de 0,05 à 5 % en poids par rapport à la masse de moulage, d'un copolymère selon la revendication 1.

7. Masse de moulage de matière thermoplastique selon la revendication 6, caractérisée en ce qu'elle se base sur le poly(chlorure de vinyle), poly(chlorure de vinylidène), des copolymères de l'éthylène-acétate de vinyle, le polyacrylonitrile, des polymères greffés ou des copolymères du chlorure de vinyle et de l'acétate de vinyle ou des mélanges de ces thermoplastiques.

8. Masse de moulage de matière thermoplastique selon la revendication 6, caractérisée en ce qu'elle contient de plus des charges, des stabilisants à la chaleur, des agents protecteurs contre la lumière, des agents antistatiques, des agents ignifugeants, des renforts, des pigments, des colorants, des adjuvants de mise en oeuvre, des agents lubrifiants, des agents de résilience, des anti-oxydants, des porogènes ou des azureurs optiques.
